# EUROPEAN PATENT APPLICATION

(11) **EP 4 598 064 A1**
(43) Date of publication of application: **06.08.2025**
(21) Application number: 22963775.6
(22) Date of filing: 31.10.2022
(51) Int. Cl.: H04W 4/02

(54) **POSITION MEASUREMENT METHOD, TIMER MAINTENANCE METHOD, AND DEVICE**

(71) Applicant: GUANGDONG OPPO MOBILE TELECOMMUNICATIONS CORP., LTD., Dongguan, Guangdong 523860 (CN)
(72) Inventor: HU, Yi, Dongguan, Guangdong 523860 (CN); LI, Haitao, Dongguan, Guangdong 523860 (CN); WU, Zuomin, Dongguan, Guangdong 523860 (CN); YU, Xinlei, Dongguan, Guangdong 523860 (CN); ZHAO, Nande, Dongguan, Guangdong 523860 (CN)
(74) Representative: RGTH
(86) International application number: PCT/CN2022/128769
(87) International publication number: WO 2024/092456

(57) **Abstract**

A position measurement method (500, 600, 700), a terminal device (120, 1600, 1700, 1800, 2310), and a network device (110, 1900, 2000, 2320). The position measurement method (500, 600, 700) comprises: when a global navigation satellite system (GNSS) position is invalid, the terminal device (120, 1600, 1700, 1800, 2310) starts GNSS measurement and/or starts a timer related to the GNSS measurement (S510). When the GNSS position is invalid, the terminal device (120, 1600, 1700, 1800, 2310) can autonomously start the GNSS measurement, so that a valid GNSS position can be obtained in time, and state conversion of the terminal device (120, 1600, 1700, 1800, 2310) is reduced.

## Description

### TECHNICAL FIELD

This application relates to the field of communications, and more specifically, to a position measurement method, a timer maintenance method, and a device.

### BACKGROUND

Currently, 3GPP (3rd Generation Partnership Project, 3rd generation partnership project) is studying NTN (Non Terrestrial Network, non terrestrial network) technology. An NTN generally provides a terrestrial user with a communication service through satellite communication. In NTN, a position of a terminal may be measured through a GNSS (Global Navigation Satellite System, global navigation satellite system).

### SUMMARY

This application provides a position measurement method, including:
starting, by a terminal device, global navigation satellite system GNSS measurement and/or a timer related to GNSS measurement in a case that a GNSS position is invalid.

An embodiment of this application provides a timer maintenance method, including:
acquiring, by a terminal device, duration of a GNSS valid timer, where a GNSS position of the terminal device is valid during running of the GNSS valid timer.

An embodiment of this application provides a timer maintenance method, including:
acquiring, by a network device, duration of a GNSS valid timer of a terminal device, where a GNSS position of the terminal device is valid during running of the GNSS valid timer.

An embodiment of this application provides a terminal device, including:
a processing unit, configured to start GNSS measurement and/or start a timer related to GNSS measurement in a case that a GNSS position is invalid.

An embodiment of this application provides a terminal device, including:
a processing unit, configured to acquire duration of a GNSS valid timer, where a GNSS position of the terminal device is valid during running of the GNSS valid timer.

An embodiment of this application provides a network device, including:
a processing unit, configured to acquire duration of a GNSS valid timer of a terminal device, where a GNSS position of the terminal device is valid during running of the GNSS valid timer.

An embodiment of this application provides a terminal device, including a processor and a memory. The memory is configured to store a computer program, and the processor is configured to invoke and run the computer program stored in the memory, to cause the terminal device to execute the position measurement method and/or the timer maintenance method.

An embodiment of this application provides a network device, including a processor and a memory. The memory is configured to store a computer program, and the processor is configured to invoke and run the computer program stored in the memory, to cause the network device to execute the timer maintenance method.

An embodiment of this application provides a chip for implementing the position measurement method and/or timer maintenance method.

Specifically, the chip includes a processor, configured to invoke a computer program from a memory and run the computer program, to cause a device installed with the chip to execute the position measurement method and/or timer maintenance method.

An embodiment of this application provides a computer-readable storage medium for storing a computer program. When the computer program is executed by a device, the device executes the position measurement method and/or timer maintenance method.

An embodiment of this application provides a computer program product, including computer program instructions. The computer program instructions cause a computer to execute the position measurement method and/or timer maintenance method.

An embodiment of this application provides a computer program. When the computer program runs on a computer, the computer executes the position measurement method and/or timer maintenance method.

In embodiments of this application, when the GNSS position is invalid, the terminal device can autonomously start GNSS measurement, so that a valid GNSS position can be obtained in time, thereby reducing state switching of the terminal device. In embodiments of this application, when the GNSS position is invalid, the terminal device can start a timer to extend a waiting time for a GNSS measurement command, thereby reducing state switching of the terminal device.

### BRIEF DESCRIPTION OF DRAWINGS

FIG. 1 is a schematic diagram of an application scenario according to an embodiment of this application.
FIG. 2 is a schematic diagram of an NTN network architecture based on transparent payload according to an embodiment of this application.
FIG. 3 is a schematic diagram of an NTN network architecture based on regenerative payload according to an embodiment of this application.
FIG. 4A is a schematic diagram of a case in which there is no timing advance.
FIG. 4B is a schematic diagram of a case in which there is timing advance.
FIG. 5 is a schematic flowchart of a position measurement method according to an embodiment of this application.
FIG. 6 is a schematic flowchart of a position measurement method according to another embodiment of this application.
FIG. 7 is a schematic flowchart of a position measurement method according to another embodiment of this application.
FIG. 8 is a schematic flowchart of a timer maintenance method according to an embodiment of this application.
FIG. 9 is a schematic flowchart of a timer maintenance method according to another embodiment of this application.
FIG. 10 is a schematic flowchart of a timer maintenance method according to an embodiment of this application.
FIG. 11 is a schematic flowchart of a timer maintenance method according to another embodiment of this application.
FIG. 12 is a schematic diagram of Example 1 according to an embodiment of this application.
FIG. 13 is a schematic diagram of Example 2 according to an embodiment of this application.
FIG. 14 is a schematic diagram of Example 3 according to an embodiment of this application.
FIG. 15 is a schematic diagram of Example 4 according to an embodiment of this application.
FIG. 16 is a schematic block diagram of a terminal device according to an embodiment of this application.
FIG. 17 is a schematic block diagram of a terminal device according to an embodiment of this application.
FIG. 18 is a schematic block diagram of a terminal device according to another embodiment of this application.
FIG. 19 is a schematic block diagram of a network device according to an embodiment of this application.
FIG. 20 is a schematic block diagram of a network device according to another embodiment of this application.
FIG. 21 is a schematic block diagram of a communications device according to an embodiment of this application.
FIG. 22 is a schematic block diagram of a chip according to an embodiment of this application.
FIG. 23 is a schematic block diagram of a communications system according to an embodiment of this application.

### DESCRIPTION OF EMBODIMENTS

The following describes the technical solutions in embodiments of this application with reference to the accompanying drawings in embodiments of this application.

The technical solutions in embodiments of this application may be applied to various communications systems, such as a global system for mobile communications (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS) system, a long term evolution (Long Term Evolution, LTE) system, an advanced long term evolution (Advanced long term evolution, LTE-A) system, a new radio (New Radio, NR) system, an evolved NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial networks (Non-Terrestrial Networks, NTN) system, a universal mobile telecommunication system (Universal Mobile Telecommunication System, UMTS), a wireless local area network (Wireless Local Area Networks, WLAN) system, wireless fidelity (Wireless Fidelity, WiFi) system, a fifth generation communications (5th-Generation, 5G) system, or another communications system.

Generally, a quantity of connections supported by a conventional communications system is limited, and is easy to implement. However, with the development of communication technologies, a mobile communications system not only supports conventional communications, but also supports, for example, device to device (Device to Device, D2D) communication, machine to machine (Machine to Machine, M2M) communication, machine type communication (Machine Type Communication, MTC), vehicle to vehicle (Vehicle to Vehicle, V2V) communication, or vehicle to everything (Vehicle to every thing, V2X) communication, and the like. Embodiments of this application may also be applied to these communications systems.

In an implementation, a communications system in embodiments of this application may be applied to a carrier aggregation (Carrier Aggregation, CA) scenario, a dual connectivity (Dual Connectivity, DC) scenario, or a standalone (Standalone, SA) networking scenario.

In an implementation, a communications system in embodiments of this application may be applied to an unlicensed spectrum, and the unlicensed spectrum may also be considered as a shared spectrum. Alternatively, a communications system in embodiments of this application may be applied to a licensed spectrum, and the licensed spectrum may also be considered as a non-shared spectrum.

Embodiments of this application are described with reference to a network device and a terminal device. The terminal device may also be referred to as a user equipment (User Equipment, UE), an access terminal, a user unit, a user station, a mobile station, a mobile site, a remote station, a remote terminal, a mobile device, a user terminal, a terminal, a wireless communications device, a user agent, a user apparatus, or the like.

The terminal device may be a station (STAION, ST) in a WLAN, may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device with a wireless communication function, a computing device or another processing device connected to a wireless modem, a vehicle-mounted device, a wearable device, a terminal device in a next-generation communications system such as an NR network, or a terminal device in a future evolved public land mobile network (Public Land Mobile Network, PLMN), or the like.

In embodiments of this application, the terminal device may be deployed on land, including being indoors or outdoors, may be handheld, wearable, or vehicle-mounted. The terminal device may be deployed on water (for example, on a ship), or may be deployed in the air (for example, on an airplane, an air balloon, or a satellite).

In embodiments of this application, the terminal device may be a mobile phone (Mobile Phone), a pad (Pad), a computer with a wireless transceiver function, a virtual reality (Virtual Reality, VR) terminal device, an augmented reality (Augmented Reality, AR) terminal device, a wireless terminal device in industrial control (industrial control), a wireless terminal device in self driving (self-driving), a wireless terminal device in remote medical (remote medical), a wireless terminal device in smart grid (smart grid), a wireless terminal device in transportation safety (transportation safety), a wireless terminal device in smart city (smart city), or a wireless terminal device in smart home (smart home), or the like.

By way of example rather than limitation, in embodiments of this application, the terminal device may alternatively be a wearable device. The wearable device may also be referred to as an intelligent wearable device, and is a general term for wearable devices such as glasses, gloves, watches, clothes, and shoes that are intelligently designed and developed based on daily wearing by using a wearable technology. The wearable device is a portable device that can be directly worn or integrated into clothes or accessories of a user. In addition to being a hardware device, the wearable device can also realize various functions through software support, data interaction, and cloud interaction. In a broad sense, wearable smart devices may include a full-featured and large-sized device that can provide full or partial functions without relying on a smart phone, for example, a smart watch or smart glasses, and devices that focus on only a specific type of application function and need to cooperate with another device such as a smart phone for use, for example, various smart bracelets and smart jewelries for physical sign monitoring.

In embodiments of this application, the network device may be a device configured to communicate with a mobile device. The network device may be an access point (Access Point, AP) in a WLAN, may be a base transceiver station (Base Transceiver Station, BTS) in GSM or CDMA, may be a NodeB (NodeB, NB) in WCDMA, or may be an evolutional Node B (Evolutional Node B, eNB or eNodeB) in LTE, or a relay station or an access point, or a vehicle-mounted device, a wearable device, a network device (gNB) in an NR network, or a network device in a future evolved PLMN, or a network device in an NTN, or the like.

By way of example rather than limitation, in embodiments of this application, the network device may have a mobility characteristic. For example, the network device may be a mobile device. Optionally, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. Optionally, the network device may alternatively be a base station disposed in a location such as land or water.

In embodiments of this application, the network device may provide a service for a cell. The terminal device communicates with the network device by using a transmission resource (for example, a frequency domain resource or a spectrum resource) used by the cell. The cell may be a cell corresponding to the network device (for example, a base station). The cell may belong to a macro station or may belong to a base station corresponding to a small cell (Small cell). The small cell herein may include a metro cell (Metro cell), a micro cell (Micro cell), a pico cell (Pico cell), a femto cell (Femto cell), or the like. These small cells have a characteristic of a small coverage range and low transmit power, and are applicable to providing a high-rate data transmission service.

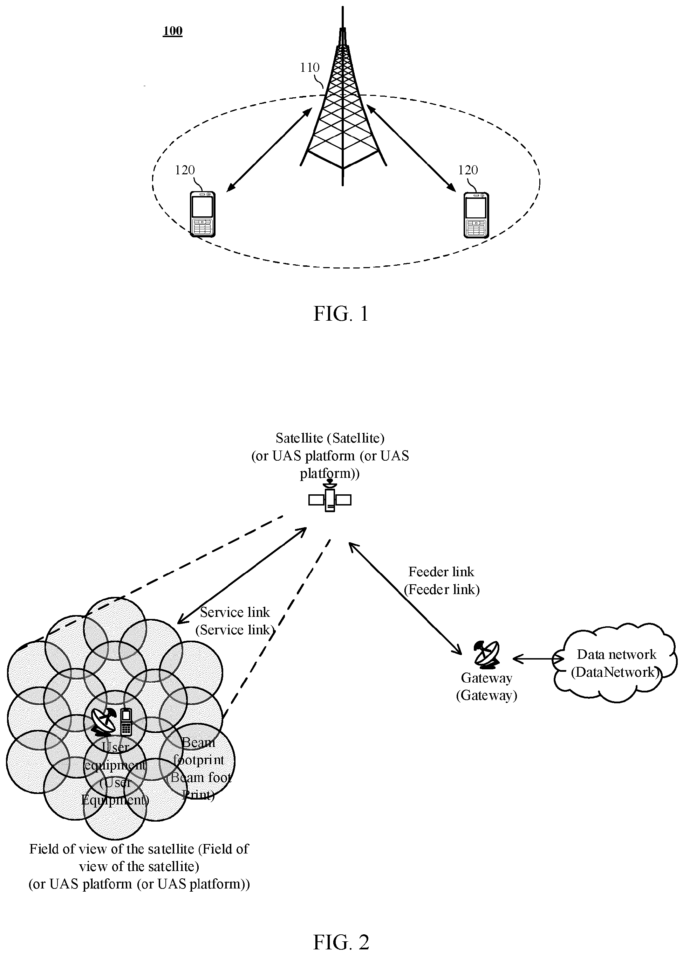

FIG. 1 exemplarily shows a communications system 100. The communications system includes a network device 110 and two terminal devices 120. In an implementation, the communications system 100 may include a plurality of network devices 110, and another quantity of terminal devices 120 may be included in coverage of each network device 110, which is not limited in embodiments of this application.

In an implementation, the communications system 100 may further include another network entity such as a mobility management entity (Mobility Management Entity, MME) or an access and mobility management function (Access and Mobility Management Function, AMF), which is not limited in embodiments of this application.

The network device may further include an access network device and a core network device. That is, the wireless communications system further includes a plurality of core networks for communicating with the access network device. The access network device may be an evolutional Node B (evolutional node B, which may be an eNB or an e-NodeB for short), a macro base station, a micro base station (also referred to as a "small cell"), a pico base station, an access point (access point, AP), a transmission point (transmission point, TP), or a new-generation Node B (new generation Node B, gNodeB), or the like in a long-term evolution (long-term evolution, LTE) system, a next-generation (mobile communications system) (next radio, NR) system, or an authorized auxiliary access long-term evolution (authorized auxiliary access long-term evolution, LAA-LTE) system.

It should be understood that in embodiments of this application, a device having a communication function in a network or a system may be referred to as a communications device. The communications system shown in FIG. 1 is used as an example. The communications device may include a network device and a terminal device that have a communications function. The network device and the terminal device may be specific devices in embodiments of this application. Details are not described herein again. The communications device may further include another device in the communications system, such as a network controller and a mobility management entity, which is not limited in embodiments of this application.

It should be understood that the terms "system" and "network" may often be used interchangeably in this specification. In this specification, the term "and/or" is merely an association relationship that describes associated objects, and represents that there may be three relationships. For example, A and/or B may represent three cases: only A exists, both A and B exist, and only B exists. In addition, the character "/" in this specification generally indicates an "or" relationship between the associated objects.

It should be understood that, in embodiments of this application, "indication" mentioned herein may refer to a direct indication, or may refer to an indirect indication, or may mean that there is an association relationship. For example, if A indicates B, it may mean that A directly indicates B, for example, B may be obtained from A. Alternatively, it may mean that A indicates B indirectly, for example, A indicates C, and B may be obtained from C. Alternatively, it may mean that there is an association relationship between A and B.

In descriptions of embodiments of this application, the term "corresponding" may mean that there is a direct or indirect correspondence between two elements, or that there is an association relationship between two elements, or that there is a relationship of "indicating" and "being indicated", "configuring" and "being configured", or the like.

To facilitate understanding of the technical solutions in embodiments of this application, the following describes related technologies in embodiments of this application. The following related technologies may be randomly combined with the technical solutions in embodiments of this application as optional solutions, which are all within the protection scope of embodiments of this application.

Satellite communication has many unique advantages over terrestrial cellular network communication. First, satellite communication is not limited by a user area. For example, general terrestrial communication cannot cover areas such as a sea, a mountain, and a desert in which a communications device cannot be set up, or where there is no communication coverage due to sparse population. However, for the satellite communication, since one satellite can cover a relatively large terrestrial, and can orbit the earth, every corner of the earth can be covered by the satellite communication in theory. Second, the satellite communication has great social values. Satellite communication can cover remote mountains or poor and backward countries or regions at low costs. This enables people in these regions to enjoy advanced voice communication and mobile Internet technologies, which helps narrow a digital divide between these regions and developed regions and promote development of these regions. Third, the satellite communication has a long communication distance without significantly increasing communication costs. Finally, the satellite communication has high stability and is not limited by natural disasters.

According to the different orbital altitudes, communication satellites are classified into an LEO (Low-Earth Orbit, low earth orbit) satellite, an MEO (Medium-Earth Orbit, medium earth orbit) satellite, a GEO (Geostationary Earth Orbit, geostationary earth orbit) satellite, an HEO (High Elliptical Orbit, high elliptical orbit) satellite, or the like. At this stage, the main study is on the LEO satellite and the GEO satellite.

An altitude of the LEO satellite ranges from 500 km to 1,500 km, with a corresponding orbital period of about 1.5 hours to 2 hours. A signal propagation delay of single-hop communication between users is generally less than 20 ms (milliseconds). A maximum satellite visible time is 20 minutes. A signal propagation distance is short, a link loss is small, and a transmit power requirement for a user terminal is not high.

An orbital altitude of the GEO satellite is 35,786 km, with a period of rotation around the earth of 24 hours. A signal propagation delay of single-hop communication between users is generally 250 ms.

To ensure coverage of a satellite and improve a system capacity of the entire satellite communications system, the satellite uses a plurality of beams to cover the ground. One satellite may form dozens or even hundreds of beams to cover the ground, and one satellite beam may cover a terrestrial area of tens to hundreds of kilometers in diameter.

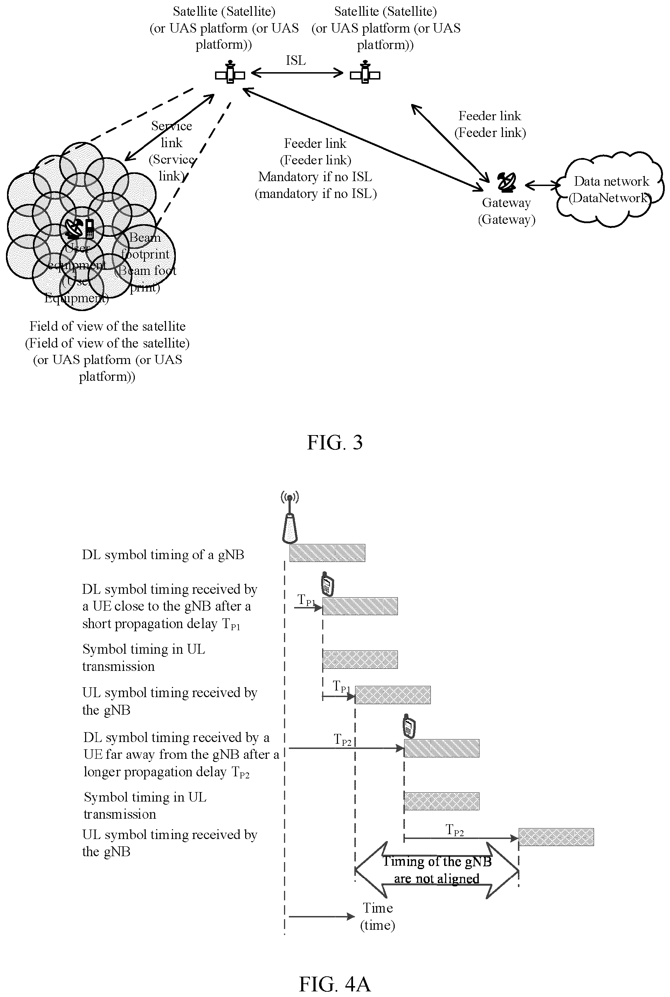

Currently, 3GPP NTN standardization mainly studies two NTN network architectures: transparent payload and regenerative payload. FIG. 2 shows an NTN network architecture based on transparent payload, and FIG. 3 shows an NTN network architecture based on regenerative payload.

An NTN network is formed by the following network elements.

One or more gateways are configured to connect a satellite and a terrestrial public network.

A feeder link is used for communication between a gateway and a satellite.

A service link is used for communication between a terminal and a satellite.

A satellite may be classified into a type of transparent payload or a type of regenerative payload according to its functions.

A satellite of a type of transparent payload provides only functions of radio frequency filtering, frequency conversion, and amplification, that is, provides only transparent forwarding of a signal, without change a waveform of the signal forwarded by the satellite.

A satellite of a type of regenerative payload provides functions such as demodulation or decoding, routing or conversion, and encoding or modulation, in addition to providing functions of radio frequency filtering, frequency conversion, and amplification. This type of satellite has some or all of functions of a base station.

An inter-satellite link is used in a regenerative payload network architecture.

### LTE/NR terrestrial network uplink timing advance

An important feature of uplink transmission is orthogonal multiple access of different UEs in time and frequency, that is, uplink transmissions from different UEs in a same cell do not interfere with each other.

To ensure orthogonality of uplink transmissions and avoid intra-cell (intra-cell) interference, an eNB/gNB requires that signals, at a same instant but on different frequency domain resources, from different UEs arrive at the eNB/gNB with their time aligned. To ensure time synchronization on the eNB/gNB side, LTE/NR supports an uplink timing advance mechanism.

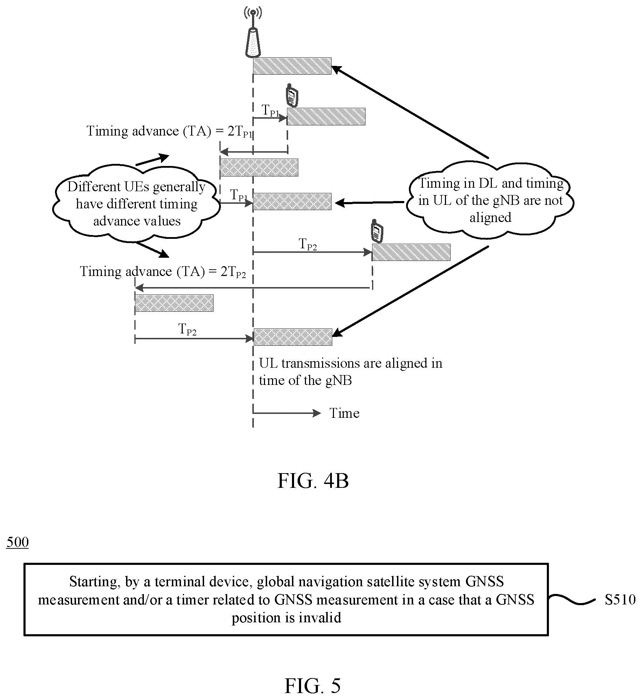

In a scenario of time synchronization on the eNB/gNB side, FIG. 4A is a schematic diagram of a case in which there is no timing advance, and FIG. 4B is a schematic diagram of a case in which there is timing advance. T_{P1} and T_{P2} denote unidirectional transmission delay of a signal from a base station to a UE. An uplink (UL) clock and a downlink (DL) clock on the eNB/gNB side are the same. However, there is an offset between an uplink clock and a downlink clock on the UE side, and different UEs have different uplink timing advance (Timing advance) values. Through proper control of an offset for each of different UEs, the eNB/gNB may control time at which uplink signals from the different UEs arrive at the eNB/gNB. Since a UE that is further away from the eNB/gNB has a larger transmission delay, the UE is required to transmit uplink data earlier than a UE closer to the eNB/gNB.

The eNB/gNB determines a TA (Timing Advance, timing advance) value for each UE by measuring uplink transmission from the UE. The eNB/gNB transmits a TA command to the UE in two manners.

1 Acquisition of initial TA: In a random access procedure, the eNB/gNB determines a TA value by measuring a received preamble, and transmits the TA value to the UE by using a Timing Advance Command (timing advance command) field of an RAR (Random Access Response, random access response).

2. Adjustment of TA in an RRC (Radio Resource Control, radio resource control) connected state: Although in a random access procedure, the UE acquires uplink synchronization with the eNB/gNB, timing when an uplink signal arrives at the eNB/gNB may change with time. Therefore, the UE is required to continuously update its uplink timing advance value to maintain uplink synchronization. If TA for a UE is required to be corrected, the eNB/gNB transmits a Timing Advance Command to the UE, requiring the UE to adjust the uplink timing. The Timing Advance Command is transmitted to the UE by using a Timing Advance Command MAC (Medium Access Control, medium access control) CE (Control Element, control element).

### TA Maintenance in NTN

In a traditional TN (Terrestrial Network, terrestrial network), a UE performs TA maintenance based on a TA command delivered by the network. For Rel-17 NTN, assuming that UEs have GNSS (Global Navigation Satellite System, global navigation satellite system) positioning capability and TA pre-compensation capability, the UEs may estimate service link (service link) TA based on locations of the UEs and a location of a serving satellite. Therefore, a TA determination method combining open loop and closed loop is introduced in NTN. Based on the current R17 standard, for NTN UEs in an RRC_IDLE (idle)/INACTIVE (inactive) and RRC_CONNECTED (connected) state, their timing advance (TA) may be determined according to the following formula:
T_{TA} = (N_{TA} + N_{TA,UE}-specific + N_{TA,common} + N_{TA,offset}) × T_{c}
where N_{TA} is defined as 0 for a scenario of PRACH (Physical Random Access Channel, physical random access channel) transmission, and may be updated later by using a TA command in Msg2/MsgB and a TA command MAC CE; and N_{TA,UE-specific} is service link TA estimated by the UE itself, which is used for TA pre-compensation. Specifically, a terminal obtains the location of the satellite based on GNSS position information obtained by itself and satellite ephemeris information broadcast by a serving cell, so as to calculate a propagation delay of the service link from the UE to the satellite. N_{TA,common} is common TA controlled by a network, which includes a timing offset necessary for any network, and N_{TA,offset} is a fixed offset for calculating TA.

From the foregoing TA calculation formula, it may be learned that, in order to acquire the service link TA (namely, N_{TA,UE-specific}), a UE in an RRC connected state is required to learn its own GNSS position information and also acquire a location of a serving satellite based on the satellite ephemeris information of the serving cell. In addition, in order to calculate TA of the UE, the UE is also required to acquire the common TA (namely, N_{TA,common}).

### GNSS operation in R17 IoT (Internet of Things, internet of things) NTN

In R17 IoT NTN (namely, the scenario where NB-IoT (NarrowBand Internet of Things, narrow band internet of things) and eMTC (enhanced Machine-Type Communication, enhanced machine-type communication) are applied to NTN), a GNSS measurement module and a communication module of an IoT terminal cannot be simultaneously operated (Simultaneous GNSS and NTN NB-IoT/eMTC operation is not assumed). In R17 NTN, the IoT terminal can perform GNSS measurement to obtain location information only in RRC IDLE or RRC INACTIVE, and a GNSS module cannot be started in an RRC connected state. Thus, the UE is required to perform measurement by using a GNSS module to obtain a GNSS position of the UE before entering the RRC connected state, determine, based on a status of the UE (for example, a moving state of the UE), a time length during which the GNSS position is valid, and report, to a network, remaining time in which the GNSS position is valid in RRC connection establishment/RRC re-establishment/RRC connection restoration. For a UE in an RRC connected state, when the GNSS position of the UE is invalid, since the UE cannot perform GNSS operation in the RRC connected state, the UE cannot calculate TA. Thus, the UE is required to return to an RRC IDLE state.

### IoT-NTN GNSS Enhancement in R18

The R18 IoT NTN enhancement project includes the following research objectives:
disabling of HARQ (Hybrid Automatic Repeat-reQuest, hybrid automatic repeat request) feedback to mitigate impact of HARQ stalling on terminal data rates (Disabling of HARQ feedback to mitigate impact of HARQ stalling on UE data rates [RAN1,RAN2]); and
study and specify, if needed, improved GNSS operations for UE pre-compensation during long connection times and for reduced power consumption (Study and specify, if needed, improved GNSS operations for a new position fix for UE pre-compensation during long connection times and for reduced power consumption [RAN1]).

Based on the foregoing research objectives, in R18, an IoT terminal accessing to an NTN may be allowed to perform GNSS operations in an RRC connected state.

In addition, GNSS enhancements for the IoT terminal accessing to an NTN may also include the following content.
1. A UE in IoT NTN may be required to reacquire a valid GNSS position fix (position fix) during an RRC connection that has a long duration. It is FFS how does the UE update or reduce the need to update the GNSS position fix during the RRC connected state.
2. In order to reduce a requirement that an RRC connected UE performs GNSS measurement, a closed-loop time and frequency adjustment mechanism may be considered.
3. For connected state GNSS measurement, at least the following candidate solutions may be considered:
   (1) the UE reacquires GNSS position fix based on timer (timer) control; or
   (2) a new gap (gap) is introduced during which the UE reacquires GNSS position fix.
4. For triggering of connected state GNSS measurement, the following may be considered:
   (1) UE-triggered GNSS measurement;
   (2) network-triggered GNSS measurement.

In addition, a base station is supported to trigger the UE to perform GNSS measurement aperiodically by using a MAC CE. The UE may report a measurement time required for GNSS position fix at least in an initial access period. The UE in RRC connected state may report GNSS effective duration by using a MAC CE.

For GNSS measurement in RRC connected state, a network may trigger the UE to perform GNSS measurement aperiodically. Generally, the network may trigger a GNSS to perform GNSS measurement before the GNSS is invalid based on a GNSS valid time reported by the UE. In some cases, if the UE still fails to receive a GNSS measurement command by the time when a GNSS position is invalid, for a behavior of the UE at this time, reference may be made to the specific solutions of embodiments of this application.

FIG. 5 is a schematic flowchart of a position measurement method 500 according to an embodiment of this application. The method may optionally be applied to the system shown in FIG. 1, but is not limited thereto. The method includes at least a part of the following content.

S510. A terminal device starts global navigation satellite system GNSS measurement and/or a timer related to GNSS measurement in a case that a GNSS position is invalid.

In an embodiment of this application, the GNSS position of the terminal device may include a measurement result obtained by positioning the terminal device based on a GNSS. The terminal device may autonomously or actively trigger start of GNSS measurement when its own GNSS position is invalid. The terminal device may alternatively start a timer related to GNSS measurement in a case that its own GNSS position is invalid. Alternatively, the terminal device may autonomously or actively trigger start of GNSS measurement and start a timer related to GNSS measurement in a case that its own GNSS position is invalid.

In an implementation, a condition for starting the timer includes at least one of the following:
the GNSS position is invalid;
the terminal device has not received a GNSS measurement command from a network device since completion of the most recent GNSS measurement; or
it is determined, based on a closed-loop timing advance TA adjustment mechanism and/or a closed-loop frequency offset adjustment mechanism, that uplink out-of-synchronization occurs on the terminal device.

For example, the terminal device autonomously starts GNSS measurement and starts a first timer in a case that the GNSS position is invalid and the terminal device has not received a GNSS measurement command from a network device since completion of the most recent GNSS measurement.

For another example, the terminal device autonomously starts GNSS measurement and starts a second timer in a case that the GNSS position is invalid, the terminal device has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device.

For example, the terminal device autonomously starts a third timer in a case that the GNSS position is invalid and the terminal device has not received a GNSS measurement command from a network device since completion of the most recent GNSS measurement.

For another example, the terminal device starts a fourth timer in a case that the GNSS position is invalid, the terminal device has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device.

In an embodiment of this application, determining, based on a closed-loop TA adjustment mechanism and/or a closed-loop frequency offset adjustment mechanism that uplink out-of-synchronization occurs on the terminal device may include: determining, based on the closed-loop TA adjustment mechanism, that uplink out-of-synchronization occurs on the terminal device; determining, based on the closed-loop frequency offset adjustment mechanism, that uplink out-of-synchronization occurs on the terminal device; or determining, based on the closed-loop TA adjustment mechanism and the closed-loop frequency offset adjustment mechanism that uplink out-of-synchronization occurs on the terminal device. There may also be other ways to determine that uplink out-of-synchronization occurs on the terminal device, which is not limited in embodiments of this application.

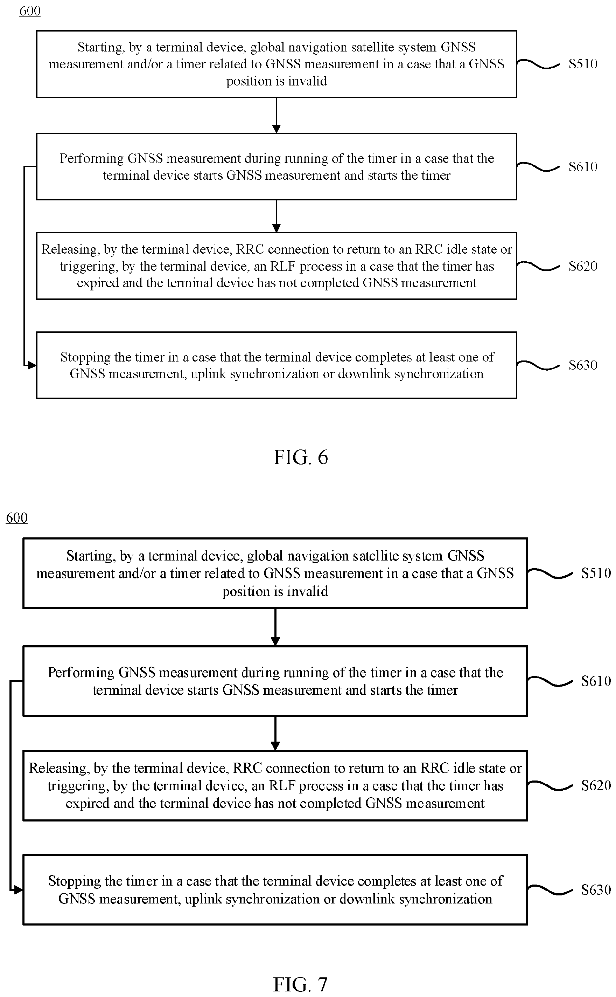

In an implementation, as shown in FIG. 6, the method further includes:
S610. performing GNSS measurement during running of the timer in a case that the terminal device starts GNSS measurement and starts the timer.

For example, when the terminal device performs GNSS measurement during running of the first timer or the second timer, the terminal device may obtain a new GNSS position of the terminal device based on a GNSS measurement result.

In an implementation, as shown in FIG. 6, the method further includes:
S620. releasing, by the terminal device, RRC connection to return to an RRC idle state or triggering, by the terminal device, an RLF (Radio Link Failure, radio link failure) process in a case that the timer has expired and the terminal device has not completed GNSS measurement.

In embodiments of this application, the terminal device may be a terminal device in an RRC connected state, for example, a UE in an RRC connected state in an NTN.

For example, the terminal device autonomously starts GNSS measurement and starts a first timer in a case that the GNSS position is invalid and the terminal device in an RRC connected state has not received a GNSS measurement command from a network device since completion of the most recent GNSS measurement. The terminal device releases RRC connection to return to an RRC idle state or the terminal device triggers an RLF process in a case that the first timer has expired and the terminal device has not completed GNSS measurement.

For another example, the terminal device autonomously starts GNSS measurement and starts a second timer in a case that the GNSS position is invalid, the terminal device has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device. The terminal device releases RRC connection to return to an RRC idle state or the terminal device triggers an RLF process in a case that the second timer has expired and the terminal device has not completed GNSS measurement.

In embodiments of this application, during the RLF process, the terminal device may reselect a cell, and initiate RRC connection reestablishment, and may re-access to a current cell or access to a new cell.

In an implementation, as shown in FIG. 6, the method further includes:
S630. stopping the timer in a case that the terminal device completes at least one of GNSS measurement, uplink synchronization or downlink synchronization.

In some examples, if duration of a timer related to GNSS measurement includes duration for completing GNSS measurement, the timer may be stopped after the terminal device completes GNSS measurement.

In some examples, if duration of a timer related to GNSS measurement includes duration for completing GNSS measurement and completing downlink synchronization, the timer may be stopped after the terminal device completes GNSS measurement and downlink synchronization.

In some examples, if duration of a timer related to GNSS measurement includes duration for completing GNSS measurement, downlink synchronization, and uplink synchronization, the timer may be stopped after the terminal device completes GNSS measurement, downlink synchronization, and uplink synchronization.

The duration of the timer related to GNSS measurement may be specifically set according to a requirement of an actual application scenario, which is not limited in embodiments of this application.

In an implementation, in a case that the terminal device completes at least one of GNSS measurement, uplink synchronization or downlink synchronization, the terminal device transmits a notification message, and the notification message is used to notify a network device that the terminal device has completed the at least one of GNSS measurement, uplink synchronization or downlink synchronization.

For example, the UE informs, by transmitting an uplink transmission (such as a RACH, or a MAC CE), a network that the UE has completed the at least one of GNSS measurement, uplink synchronization or downlink synchronization.

In an implementation, as shown in FIG. 7, the method further includes:
S710. waiting for, by the terminal device, a GNSS measurement command during running of the timer after starting the timer in a case that the GNSS position is invalid. For example, the terminal device waits for a GNSS measurement command after starting the timer in a case that the GNSS position is invalid and the terminal device has not received a GNSS measurement command from a network device since completion of the most recent GNSS measurement.

In embodiments of this application, the terminal device may not autonomously or actively trigger GNSS measurement, but starts a timer related to GNSS measurement in a case that the GNSS position is invalid and the terminal device has not received a GNSS measurement command from a network device since completion of the most recent GNSS measurement. During running of the timer, the terminal device may wait for the GNSS measurement command from the network device. If the GNSS measurement command is still not received by the time at which the timer expires, the terminal device may stop waiting for the GNSS measurement command.

In an implementation, as shown in FIG. 7, the method further includes:
S720. releasing, by the terminal device, RRC connection to return to an RRC idle state or triggering, by the terminal device, an RLF process in a case that the timer has expired and the terminal device has not received the GNSS measurement command.

For another example, the terminal device starts a third timer in a case that the GNSS position is invalid and the terminal device in an RRC connected state has not received a GNSS measurement command from a network device since completion of the most recent GNSS measurement. The terminal device releases RRC connection to return to an RRC idle state or the terminal device triggers an RLF process in a case that the third timer has expired and the terminal device has not received the GNSS measurement command.

For another example, the terminal device starts a fourth timer in a case that the GNSS position is invalid, the terminal device in an RRC connected state has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device. The terminal device releases RRC connection to return to an RRC idle state or the terminal device triggers an RLF process in a case that the fourth timer has expired and the terminal device has not received the GNSS measurement command.

In an implementation, as shown in FIG. 7, the method further includes:
S730. stopping the timer in a case that the terminal device receives the GNSS measurement command from a network device. This step may be performed after S610 or after S710.

For example, during running of the third timer, if the terminal device receives the GNSS measurement command from the network device, the third timer is stopped. During running of the fourth timer, if the terminal device receives the GNSS measurement command from the network device, the fourth timer is stopped.

In an implementation, duration of the timer is configured by the network device. For example, the terminal device receives timer configuration information from the network device, and the timer configuration information is used for duration of at least one of the first timer, the second timer, the third timer, or the fourth timer.

In an implementation, duration of a measurement gap (gap) is reused as the duration of the timer.

In an implementation, the GNSS position being invalid includes that: a GNSS valid timer has expired.

For example, the terminal device autonomously starts GNSS measurement and starts a first timer in a case that the GNSS valid timer expires and the terminal device has not received a GNSS measurement command from a network device since completion of the most recent GNSS measurement.

For another example, the terminal device autonomously starts GNSS measurement and starts a second timer in a case that the GNSS valid timer expires, the terminal device has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device.

For another example, the terminal device starts a third timer in a case that the GNSS valid timer expires and the terminal device has not received a GNSS measurement command from a network device since completion of the most recent GNSS measurement.

For another example, the terminal device starts a fourth timer in a case that the GNSS valid timer expires, the terminal device has not received a GNSS measurement command from a network device since completion of the most recent GNSS measurement, and it is determined, based on a closed-loop timing advance TA adjustment mechanism and/or a closed-loop frequency offset adjustment mechanism, that uplink out-of-synchronization occurs on the terminal device.

In embodiments of this application, the GNSS valid timer may be used to determine whether a GNSS measurement result of the terminal device, namely, a GNSS position, is valid. During running of the GNSS valid timer, the terminal device and the network device may deem that the GNSS position of the terminal device is valid. The GNSS valid timer may be named in other ways, such as a GNSS measurement result valid timer, a GNSS position valid timer, or a GNSS result timer. For a specific maintenance method of the GNSS valid timer, reference may be made to relevant description of the following timer maintenance method embodiments.

In embodiments of this application, when a GNSS position is invalid, a terminal device autonomously starts GNSS measurement so as to obtain a valid GNSS position in time, thereby reducing state switching of the terminal device. When the GNSS position is invalid, the terminal device starts a timer to extend a waiting time for a GNSS measurement command, thereby reducing state switching of the terminal device. For example, a terminal device in an RRC connected state can restore or maintain uplink synchronization while maintaining RRC connection as much as possible, thereby improving user experience.

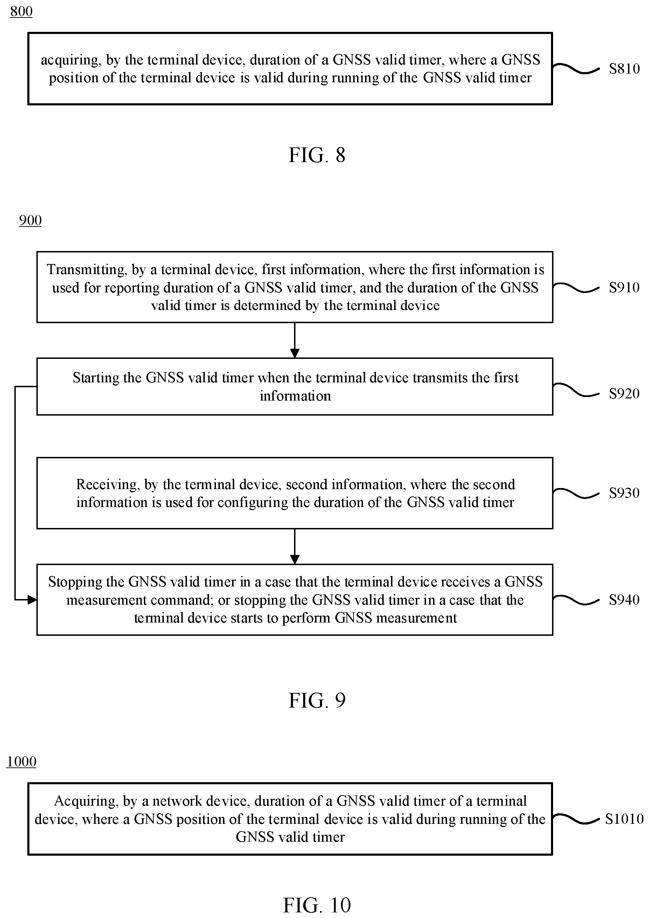

FIG. 8 is a schematic flowchart of a timer maintenance method 800 according to an embodiment of this application. The method may optionally be applied to the system shown in FIG. 1, but is not limited thereto. This embodiment may be implemented independently or combined with the foregoing position measurement method embodiment. The timer maintenance method includes at least part of the following content.

S810. A terminal device acquires duration of a GNSS valid timer, where a GNSS position of the terminal device is valid during running of the GNSS valid timer.

In an embodiment of this application, the terminal device may acquire the duration of the GNSS valid timer locally, or acquire the duration of the GNSS valid timer from a network device. The terminal device may control running of the GNSS valid timer based on the duration of the GNSS valid timer. During running of the GNSS valid timer, the terminal device and/or the network device may deem that the GNSS position of the terminal device is valid. In a case that the GNSS valid timer expires, the terminal device and/or the network device may deem that the GNSS position of the terminal device is invalid or the GNSS position is expired. In an embodiment of this application, the terminal device may learn in time whether its current GNSS position is valid by maintaining the GNSS valid timer, such as acquiring the duration of the GNSS valid timer. For example, when is the current GNSS position of the terminal device valid and when is the current GNSS position not valid. Thus, the terminal device may determine TA by using the valid GNSS position.

In an implementation, as shown in FIG. 9, the timer maintenance method 900 further includes:
S910. transmitting, by the terminal device, first information, where the first information is used for reporting the duration of the GNSS valid timer, and the duration of the GNSS valid timer is determined by the terminal device.

In an embodiment of this application, if the terminal device itself determines the duration of the GNSS valid timer, the terminal device may transmit first information in uplink signalling such as a MAC CE or RRC signalling to the network device, and the uplink signalling may include the duration of the GNSS valid timer.

In an implementation, as shown in FIG. 9, the timer maintenance method further includes:
S920. starting the GNSS valid timer when the terminal device transmits the first information.
In an embodiment of this application, if the terminal device reports the duration of the GNSS valid timer to the network device by using uplink signalling, the GNSS valid timer may be started when the uplink signalling is transmitted.

In an implementation, as shown in FIG. 9, the timer maintenance method further includes:
S930. receiving, by the terminal device, second information, where the second information is used for configuring the duration of the GNSS valid timer.

In a timer maintenance method of an embodiment of this application, only S910 and S920 may be included, or only S930 may be included, or all these three steps may be included. For example, if the duration of the GNSS valid timer is determined by the network device, the method may include S930. If the duration of the GNSS valid timer is determined by the terminal device, the method may include S910 and S920. If both the terminal device and the network device can determine the duration of the GNSS valid timer, the method may include S910, S920 and S930, and the terminal device and the network device may use the duration of the GNSS valid timer received from the other party to verify local duration.

In an embodiment of this application, if the network device determines the duration of the GNSS valid timer, the network device may transmit second information in downlink signalling such as a MAC CE or RRC signalling to the terminal device. The downlink signalling may include the duration of the GNSS valid timer. After receiving the downlink signalling, the terminal device may configure the duration of the GNSS valid timer based on the downlink signalling.

In an implementation, the terminal device starts the GNSS valid timer based on the duration of the GNSS valid timer. The GNSS valid timer is started in a manner including at least one of the following:
starting the GNSS valid timer when the terminal device receives the second information; or
starting, by the terminal device, the GNSS valid timer at a specified time point based on the second information.

For example, if the terminal device receives downlink signalling for indicating the duration of the GNSS valid timer, the GNSS valid timer may be started upon receiving the downlink signalling.

For example, if the terminal device receives downlink signalling indicating the duration of the GNSS valid timer, the GNSS valid timer may be started based on a specified time point indicated in the downlink signalling.

In an embodiment of this application, the second information may indicate the specified time point explicitly or implicitly.

In an implementation, the specified time point includes at least one of the following:
a time point for starting the GNSS valid timer included in the second information, which is an explicit indication manner; or
a time point at which the second information becomes effective, which is an implicit indication manner.

In an implementation, as shown in FIG. 9, the timer maintenance method further includes:
S940. stopping the GNSS valid timer in a case that the terminal device receives a GNSS measurement command; or stopping the GNSS valid timer in a case that the terminal device starts to perform GNSS measurement.

For example, if the terminal device has started the GNSS valid timer, the GNSS valid timer may be stopped when the terminal device receives the GNSS measurement command from the network device.

For another example, if the terminal device has started the GNSS valid timer, the GNSS valid timer may be stopped when the terminal device starts to perform GNSS measurement autonomously or based on the GNSS measurement command.

FIG. 10 is a schematic flowchart of a timer maintenance method 1000 according to an embodiment of this application. The method may optionally be applied to the system shown in FIG. 1, but is not limited thereto. This embodiment may be implemented independently or combined with the foregoing position measurement method embodiment. The timer maintenance method includes at least part of the following content:

S1010. acquiring, by a network device, duration of a GNSS valid timer of a terminal device, where a GNSS position of the terminal device is valid during running of the GNSS valid timer.

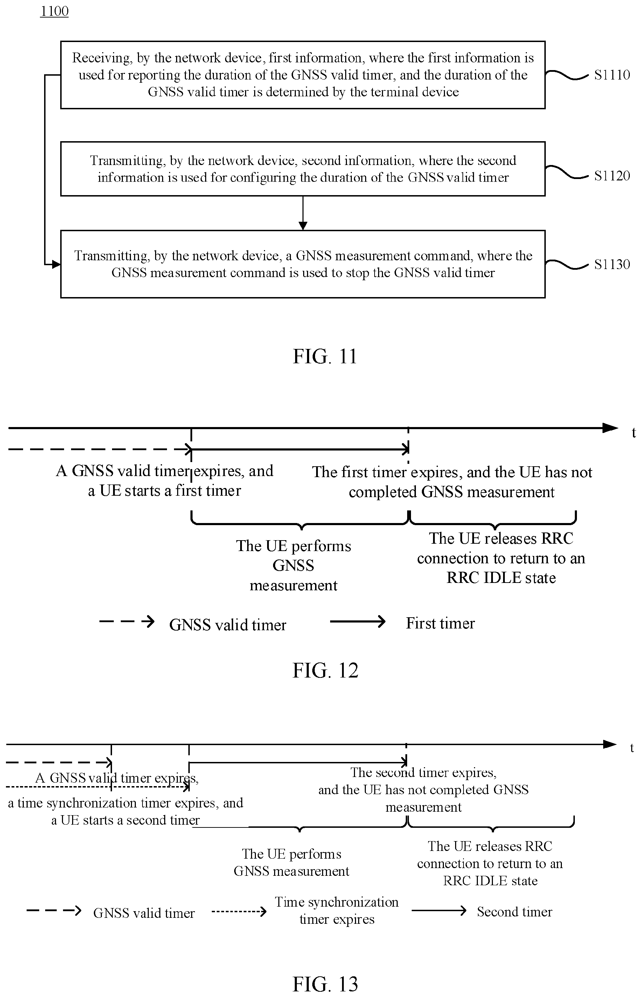

In an implementation, as shown in FIG. 11, the timer maintenance method 1100 further includes:

S1110. receiving, by the network device, first information, where the first information is used for reporting the duration of the GNSS valid timer, and the duration of the GNSS valid timer is determined by the terminal device.

In an implementation, the GNSS valid timer is started when the terminal device transmits the first information.

In an implementation, as shown in FIG. 11, the timer maintenance method further includes: configuring, by the network device, the duration of the GNSS valid timer for the terminal device. The specific configuration method may include:
S1120: transmitting, by the network device, second information, where the second information is used for configuring the duration of the GNSS valid timer.

In a timer maintenance method of an embodiment of this application, only S1110 may be included, or only S1120 may be included, or all the two steps may be included. For example, if the duration of the GNSS valid timer is determined by the network device, the method may include S1120. If the duration of the GNSS valid timer is determined by the terminal device, the method may include S1110. If both the terminal device and the network device can determine the duration of the GNSS valid timer, the method may include S1110 and S1120, and the terminal device and the network device may use the duration of the GNSS valid timer received from the other party to verify local duration.

In an implementation, the second information is used for indicating starting the GNSS valid timer at a specified time point. In an embodiment of this application, the second information may indicate the specified time point explicitly or implicitly.

In an implementation, the specified time point includes at least one of the following:
a time point for starting the GNSS valid timer included in the second information; or
a time point at which the second information becomes effective.

In an implementation, as shown in FIG. 11, the timer maintenance method further includes:
S1130. transmitting, by the network device, a GNSS measurement command, where the GNSS measurement command is used to stop the GNSS valid timer.

For specific examples in which the network device performs the methods 1000 and 1100 in embodiments, reference may be made to the related descriptions of the network device in the foregoing methods 800 and 900. For brevity, details are not described herein again.

The position measurement method and/or the timer maintenance method according to embodiments of this application may be applied to a scenario where a terminal maintains uplink synchronization in NTN. For example, a method for a terminal to maintain uplink synchronization in NTN may include the following manners.

Manner 1: When a GNSS valid timer (valid timer) expires, a UE autonomously starts GNSS measurement and simultaneously starts a first timer. If the UE still does not complete GNSS measurement by the time at which the first timer expires, the UE releases RRC connection to return to an RRC IDLE state or the UE triggers an RLF.

Manner 2: When the GNSS valid timer expires and the UE determines, based on a closed-loop TA and/or frequency offset adjustment mechanism, that uplink out-of-synchronization occurs on the UE, the UE autonomously starts GNSS measurement and simultaneously starts a second timer. If the UE still fails to complete GNSS measurement by the time when the second timer expires, the UE releases RRC connection to return to an RRC IDLE state or the UE triggers an RLF.

Manner 3: When the GNSS valid timer expires, the UE starts a third timer. If the UE still fails to receive the GNSS measurement command from a network by the time when the third timer expires, the UE releases RRC connection to return to an RRC IDLE state or the UE triggers an RLF.

Manner 4: When the GNSS valid timer expires and the UE determines, based on a closed-loop TA and/or frequency offset adjustment mechanism, that uplink out-of-synchronization occurs on the UE, the UE starts a fourth timer. If the UE still fails to receive the GNSS measurement command from the network by the time when the fourth timer expires, the UE releases RRC connection to return to an RRC IDLE state or the UE triggers an RLF.

Specific examples of the foregoing methods are as follows.

### Example 1

A UE autonomously starts GNSS measurement when a GNSS valid timer (valid timer) expires. Specifically, when the GNSS valid timer expires, the UE autonomously starts GNSS measurement and simultaneously starts a first timer. If the UE still fails to complete GNSS measurement by the time when the first timer expires, the UE releases RRC connection to return to an RRC IDLE state or the UE triggers an RLF.

As shown in Figure 12, a specific implementation process of this example is as follows.
1. A UE in an RRC connected state maintains a GNSS valid timer. Determining of duration of the GNSS valid timer and conditions for starting the GNSS valid timer are as follows.
   (1) The timer duration of the GNSS valid timer is determined by the UE and reported to a base station by using uplink signalling (such as a MAC CE, or RRC signalling); and the UE starts the GNSS valid timer when reporting the timer duration of the GNSS valid timer.
   (2) The timer duration of the GNSS valid timer is configured by the base station to the UE by using downlink signalling (such as a MAC CE, or RRC signalling). For example, the base station may configure the timer duration of the GNSS valid timer based on a GNSS valid time most recently reported by the UE.
   The UE may start the GNSS valid timer in one of the following manners:
   a. upon receiving a duration configuration of the GNSS valid timer, the UE starts the GNSS valid timer;
   b. the UE starts the GNSS valid timer at a specified time point based on indication of a network. For example, the network configures the duration of the GNSS valid timer and also explicitly indicates a time point at which the UE starts the GNSS valid timer, or the UE uses a time point at which the duration configuration of the GNSS valid timer becomes effective (for example, a time point at which downlink signalling carrying the duration configuration of the GNSS valid timer becomes effective) as a time to start the GNSS valid timer.
2. Optionally, if the UE receives a GNSS measurement command from the network, the UE stops the GNSS valid timer.
3. The UE starts the first timer when a first condition is met, and the UE performs GNSS measurement during running of the first timer.
   (1) The first condition is that the GNSS valid timer has expired and the UE has not received a GNSS measurement command from the network.
   (2) Duration of the first timer is configured by the network, for example, duration of a measurement gap is reused, or the network independently configures the duration of the first timer.
4. If the UE completes the GNSS measurement and/or uplink synchronization and/or downlink synchronization, the UE informs, by transmitting an uplink transmission (such as RACH (Random Access CHannel, random access channel), or a MAC CE), the network that the UE has completed the GNSS measurement and/or uplink synchronization and/or downlink synchronization.
5. If the UE completes the GNSS measurement and/or uplink synchronization and/or downlink synchronization, the UE stops the first timer.
6. If the first timer expires and the UE still fails to complete the GNSS measurement by the time when the first timer is expired, the UE releases RRC connection to return to an RRC IDLE state or the UE triggers an RLF.

A schematic diagram of this example is as follows.

### Example 2

When a GNSS valid timer expires and a UE determines, based on a closed-loop TA and/or frequency offset adjustment mechanism, that uplink out-of-synchronization occurs on the UE, the UE autonomously starts GNSS measurement. Specifically, when the GNSS valid timer expires and the UE determines, based on a closed-loop TA and/or frequency offset adjustment mechanism, that uplink out-of-synchronization occurs on the UE, the UE autonomously starts GNSS measurement and simultaneously starts a second timer. If the UE still fails to complete GNSS measurement by the time when the second timer expires, the UE releases RRC connection to return to an RRC IDLE state or the UE triggers an RLF.

As shown in FIG. 13, a specific implementation process of this example is as follows.
1. A UE in an RRC connected state maintains a GNSS valid timer. Determining of duration of the GNSS valid timer and conditions for starting the GNSS valid timer are the same as step 1 in Example 1.
2. Optionally, if the UE receives a GNSS measurement command from a network, the UE stops the GNSS valid timer.
3. The UE starts a second timer when a second condition is met, and the UE performs GNSS measurement during running of the second timer.
   (1) The second condition is that the GNSS valid timer expires, the UE determines, based on a closed-loop TA and/or frequency offset adjustment mechanism, that uplink out-of-synchronization occurs on the UE, for example, a time synchronization timer (timeAligmenttimer) has expired, and the UE has not received a GNSS measurement command from a network.
   (2) Duration of the second timer is configured by the network, for example, duration of a measurement gap is reused, or the network independently configures duration of the second timer.
4. If the UE completes GNSS measurement and/or uplink synchronization and/or downlink synchronization, the UE informs, by transmitting an uplink transmission (such as a manner of RACH, or a MAC CE), the network that the UE has completed the GNSS measurement and/or uplink synchronization and/or downlink synchronization.
5. If the UE completes the GNSS measurement and/or uplink synchronization and/or downlink synchronization, the UE stops the second timer.
6. If the second timer expires and the UE still fails to complete the GNSS measurement by the time when the second timer expires, the UE releases RRC connection to return to an RRC IDLE state or the UE triggers an RLF.

A schematic diagram of this example is as follows.

### Example 3

After a GNSS valid timer expires, a UE continues to wait for a network to issue a GNSS measurement command in a specific period of time. Specifically, when the GNSS valid timer expires, the UE starts a third timer. If the UE still fails to receive the GNSS measurement command from the network by the time when the third timer expires, the UE releases RRC connection to return to an RRC IDLE state or the UE triggers an RLF.

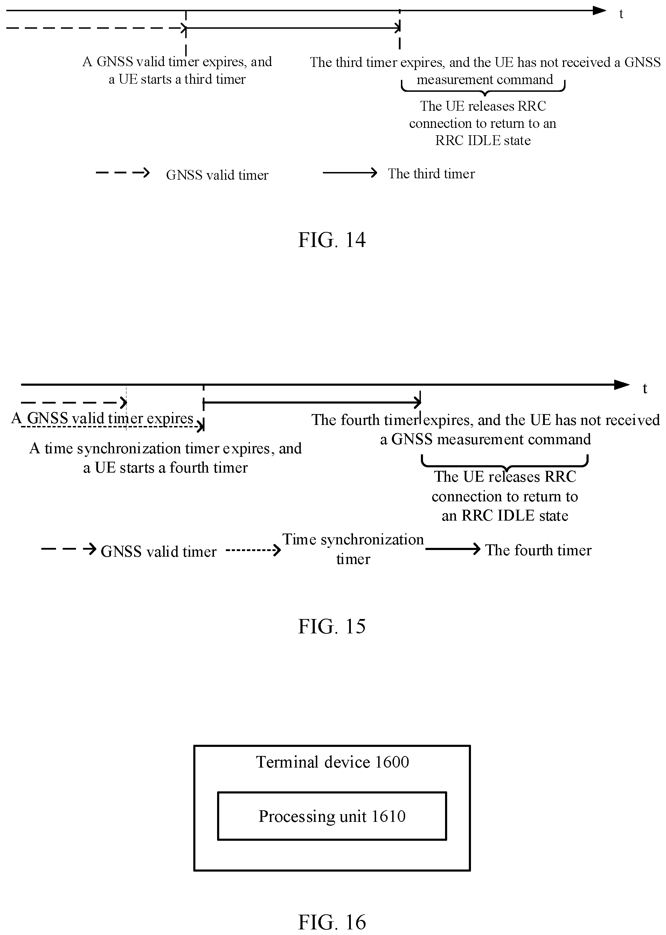

As shown in FIG. 14, a specific implementation process of this example is as follows.
1. A UE in an RRC connected state maintains a GNSS valid timer. Determining of duration of the GNSS valid timer and conditions for starting the GNSS valid timer are the same as step 1 in Example 1.
2. Optionally, if the UE receives a GNSS measurement command from a network, the UE stops the GNSS valid timer.
3. The UE starts a third timer when a first condition is met. The first condition is the same as that in Example 1. Duration of the third timer is configured by the network.
4. If the UE receives the GNSS measurement command from the network, the UE stops the third timer.
5. If the third timer expires, and the UE still fails to receive the GNSS measurement command from the network by the time when the third timer expires, the UE releases RRC connection to return to an RRC IDLE state or the UE triggers an RLF.

A schematic diagram of this example is as follows.

### Example 4

When a GNSS valid timer expires and a UE determines, based on a closed-loop TA and/or frequency offset adjustment mechanism, that uplink out-of-synchronization occurs on the UE, the UE continues to wait for a network to issue a GNSS measurement command in a specific period of time. Specifically, when the GNSS valid timer expires and the UE determines, based on a closed-loop TA and/or frequency offset adjustment mechanism, that uplink out-of-synchronization occurs on the UE, the UE starts a fourth timer. If the UE still fails to receive the GNSS measurement command from the network by the time when the fourth timer expires, the UE releases RRC connection to return to an RRC IDLE state or the UE triggers an RLF.

As shown in FIG. 15, a specific implementation process of this example is as follows.
1. A UE in an RRC connected state maintains a GNSS valid timer. Determining of duration of the GNSS valid timer and conditions for starting the GNSS valid timer are the same as step 1 in Example 1.
2. Optionally, if the UE receives a GNSS measurement command from a network, the UE stops the GNSS valid timer.
3. The UE starts a fourth timer when a second condition is met. The second condition is the same as step 3 in Example 2. Duration of the fourth timer is configured by the network.
4. If the UE receives the GNSS measurement command from the network, the UE stops the fourth timer.
5. If the fourth timer expires, and the UE still fails to receive the GNSS measurement command from the network by the time when the fourth timer expires, the UE releases RRC connection to return to an RRC IDLE state or the UE triggers an RLF.

A schematic diagram of this example is as follows.

Embodiments of this application provide a method for measuring a GNSS by a terminal in NTN, which defines a behavior of a UE in a case that a GNSS position is invalid and the UE has not received a GNSS measurement command from a network. The UE autonomously triggering GNSS measurement or continuing to wait for the GNSS measurement command from the network for a period of time is introduced, so that the UE can restore or maintain uplink synchronization while maintaining RRC connection as much as possible, thereby improving user experience.

FIG. 16 is a schematic block diagram of a terminal device 1600 according to an embodiment of this application. The terminal device 1600 may include:
a processing unit 1610, configured to start GNSS measurement and/or start a timer related to GNSS measurement in a case that a GNSS position is invalid.

In an implementation, the processing unit is further configured to perform GNSS measurement during running of the timer in a case that GNSS measurement and the timer are started.

In an implementation, the processing unit is further configured to release radio resource control RRC connection to return to an RRC idle state or trigger, by the terminal device, a radio link failure RLF process in a case that the timer has expired and the terminal device has not completed GNSS measurement.

In an implementation, the processing unit is further configured to stop the timer in a case that the terminal device completes at least one of GNSS measurement, uplink synchronization or downlink synchronization.

In an implementation, the terminal device further includes a transmitting unit, configured to transmit a notification message in a case that the terminal device completes at least one of GNSS measurement, uplink synchronization or downlink synchronization, and the notification message is used to notify a network device that the terminal device has completed the at least one of GNSS measurement, uplink synchronization or downlink synchronization.

In an implementation, the processing unit is further configured to wait for a GNSS measurement command during running of the timer after starting the timer in a case that the GNSS position is invalid and the terminal device has not received a GNSS measurement command from a network device since completion of the most recent GNSS measurement.

In an implementation, the processing unit is further configured to release RRC connection to return to an RRC idle state or trigger, by the terminal device, an RLF process in a case that the timer has expired and the terminal device has not received the GNSS measurement command.

In an implementation, a condition for the processing unit to start the timer includes at least one of following:
the GNSS position is invalid;
the terminal device has not received a GNSS measurement command from the network device; or
it is determined, based on a closed-loop timing advance TA adjustment mechanism and/or a closed-loop frequency offset adjustment mechanism, that uplink out-of-synchronization occurs on the terminal device.

In an implementation, the processing unit is further configured to stop the timer in a case of receiving the GNSS measurement command from a network device.

In an implementation, duration of the timer is configured by a network device.

In an implementation, duration of a measurement gap is reused as the duration of the timer.

In an implementation, the GNSS position being invalid includes that: a GNSS valid timer has expired.

The terminal device 1600 in this embodiment of this application can implement corresponding functions of the terminal devices 500, 600 and 700 in the foregoing method embodiments. For processes, functions, implementations, and beneficial effects corresponding to each module (sub-module, unit, component, or the like) in the terminal device 1600, reference may be made to the corresponding description in the foregoing method embodiments. Details are not described herein again. It should be noted that functions of modules (submodules, units, components, or the like) in the terminal device 1500 in the embodiment of this application may be implemented by different modules (submodules, units, components, or the like), or may be implemented by a same module (submodule, unit, component, or the like).

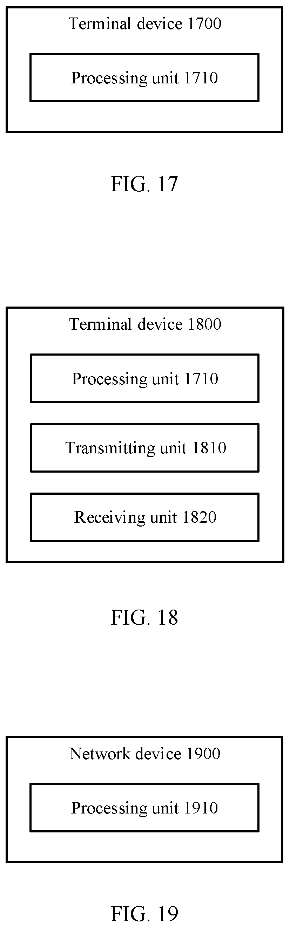

FIG. 17 is a schematic block diagram of a terminal device 1700 according to an embodiment of this application. The terminal device 1700 may include:
a processing unit 1710, configured to acquire duration of a GNSS valid timer, where a GNSS position of the terminal device is valid during running of the GNSS valid timer.

In an implementation, as shown in FIG. 18, the terminal device 1800 further includes:
a transmitting unit 1810, configured to transmit first information, where the first information is used for reporting the duration of the GNSS valid timer, and the duration of the GNSS valid timer is determined by the terminal device.

In an implementation, the terminal device further includes:
the processing unit is further configured to start the GNSS valid timer when the transmitting unit transmits the first information.

In an implementation, as shown in FIG. 18, the terminal device further includes:
a receiving unit 1820, configured to receive second information, where the second information is used for configuring the duration of the GNSS valid timer.

In an implementation, a manner in which the processing unit starts the GNSS valid timer includes at least one of the following:
starting the GNSS valid timer when receiving the second information; or
starting the GNSS valid timer at a specified time point based on the second information.

In an implementation, the specified time point includes at least one of the following:
a time point for starting the GNSS valid timer included in the second information; or
a time point at which the second information becomes effective.

In an implementation, the processing unit 1710 is further configured to: stop the GNSS valid timer in a case that the terminal device receives a GNSS measurement command; or stop the GNSS valid timer in a case that the terminal device starts to perform GNSS measurement.

The terminal devices 1700 and 1800 in the embodiment of this application can implement corresponding functions of the terminal devices in the embodiments of foregoing methods 800 and 900. For procedures, functions, implementations, and beneficial effects corresponding to modules (submodules, units, components, or the like) in the terminal devices 1700 and 1800, reference may be made to corresponding descriptions in the foregoing method embodiments. Details are not described herein again. It should be noted that functions of modules (submodules, units, components, or the like) in the terminal devices 1700 and 1800 in the embodiment of this application may be implemented by different modules (submodules, units, components, or the like), or may be implemented by a same module (submodule, unit, component, or the like).

FIG. 19 is a schematic block diagram of a network device 1900 according to an embodiment of this application. The network device 1900 may include:
a processing unit 1910, configured to acquire duration of a GNSS valid timer of a terminal device, where a GNSS position of the terminal device is valid during running of the GNSS valid timer.

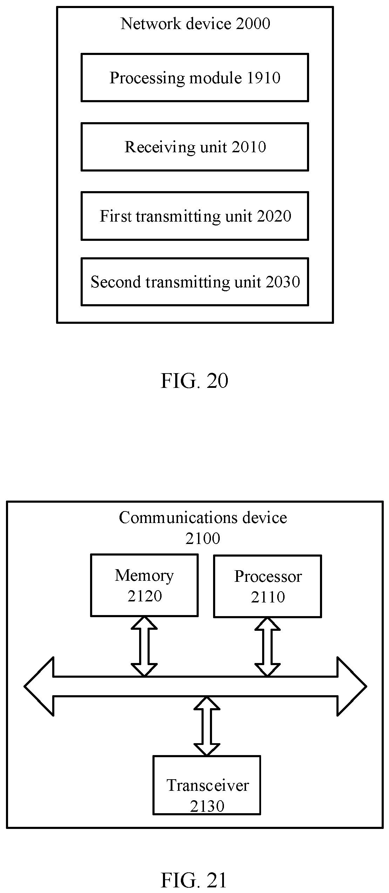

In an implementation, as shown in FIG. 20, the network device 2000 further includes:
a receiving unit 2010, configured to receive first information, where the first information is used for reporting the duration of the GNSS valid timer, and the duration of the GNSS valid timer is determined by the terminal device.

In an implementation, the GNSS valid timer is started when the terminal device transmits the first information.

In an implementation, the network device further includes: a first transmitting unit 2020, configured to transmit second information, where the second information is used for configuring the duration of the GNSS valid timer.

In an implementation, the second information is used for indicating starting the GNSS valid timer at a specified time point.

In an implementation, the specified time point includes at least one of the following:
a time point for starting the GNSS valid timer included in the second information; or
a time point at which the second information becomes effective.

In an implementation, as shown in FIG. 20, the network device further includes:
a second transmitting unit 2030, configured to transmit a GNSS measurement command, where the GNSS measurement command is used to stop the GNSS valid timer.

The network devices 1900 and 2000 in the embodiment of this application can implement corresponding functions of the network devices 1000 and 1100 in the foregoing method embodiments. For procedures, functions, implementations, and beneficial effects corresponding to modules (submodules, units, components, or the like) in the network devices 1900 and 2000, reference may be made to corresponding descriptions in the foregoing method embodiments. Details are not described herein again. It should be noted that functions of modules (submodules, units, components, or the like) in the network devices 1900 and 2000 in the embodiment of this application may be implemented by different modules (submodules, units, components, or the like), or may be implemented by a same module (submodule, unit, component, or the like).

FIG. 21 is a schematic structural diagram of a communications device 2100 according to an embodiment of this application. The communications device 2100 includes a processor 2110, and the processor 2110 may invoke a computer program from a memory and run the computer program, to cause the communications device 2100 to implement the method in embodiments of this application.

In an implementation, the communications device 2100 may further include a memory 2121. The processor 2110 may invoke a computer program from the memory 2121 and run the computer program, to cause the communications device 2100 to implement a method in embodiments of this application.

The memory 2121 may be independent of the processor 2110 or may be integrated into the processor 2110.

In an implementation, the communications device 2100 may further include a transceiver 2130. The processor 2110 may control the transceiver 2130 to communicate with another device. Specifically, the processor 2110 may transmit information or data to the another device, or receive information or data transmitted by the another device.

The transceiver 2130 may include a transmitter and a receiver. The transceiver 2130 may further include an antenna, and a quantity of antennas may be one or more.

In an implementation, the communications device 2100 may be the network device according to embodiments of this application, and the communications device 2100 may implement corresponding processes implemented by the network device in various methods according to embodiments of this application. For brevity, details are not described herein again.

In an implementation, the communications device 2100 may be the terminal device according to embodiments of this application, and the communications device 2100 may implement corresponding processes implemented by the terminal device in various methods according to embodiments of this application. For brevity, details are not described herein again.

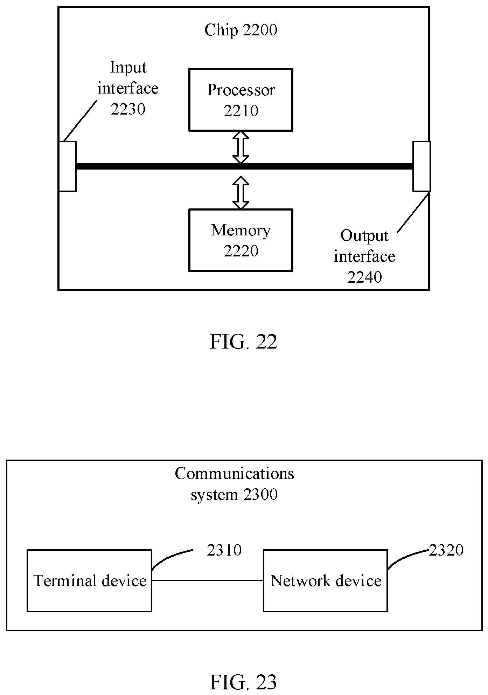

FIG. 22 is a schematic structural diagram of a chip 2200 according to an embodiment of this application. The chip 2200 includes a processor 2210, and the processor 2210 may invoke a computer program from a memory and run the computer program, to implement a method in embodiments of this application.

In an implementation, the chip 2200 may further include a memory 2220. The processor 2210 may invoke a computer program from the memory 2220 and run the computer program, so as to implement a method executed by the terminal device or the network device in embodiments of this application.

The memory 2220 may be a separate component independent of the processor 2210, or may be integrated into the processor 2210.

In an implementation, the chip 2200 may further include an input interface 2230. The processor 2210 may control the input interface 2230 to communicate with another device or chip, and specifically, may acquire information or data transmitted by the another device or chip.

In an implementation, the chip 2200 may further include an output interface 2240. The processor 2210 may control the output interface 2240 to communicate with another device or chip, and specifically, may output information or data to the another device or chip.

In an implementation, the chip may be applied to the network device in embodiments of this application, and the chip may implement the corresponding processes implemented by the network device in various methods of the embodiments of this application. For brevity, details are not described herein again.

In an implementation, the chip may be applied to the terminal device in embodiments of this application, and the chip may implement the corresponding processes implemented by the terminal device in various methods of the embodiments of this application. For brevity, details are not described herein again.

Chips applied to the network device and the terminal device may be a same chip or different chips.

It should be understood that the chip mentioned in this embodiment of this application may alternatively be referred to as a system-level chip, a system chip, a chip system, a system-on-chip, or the like.

The processor mentioned above may be a general-purpose processor, a digital signal processor (digital signal processor, DSP), a field programmable gate array (field programmable gate array, FPGA), an application specific integrated circuit (application specific integrated circuit, ASIC) or another programmable logic device, a transistor logic device, a discrete hardware component, or the like. The general-purpose processor mentioned above may be a microprocessor, or may be any conventional processor.

The memory mentioned above may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM).

It should be understood that, by way of example but not limitative description, for example, the memory in this embodiment of this application may alternatively be a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synch link DRAM, SLDRAM), a direct Rambus random access memory (Direct Rambus RAM, DR RAM), or the like. In other words, the memory in this embodiment of this application includes but is not limited to these memories and any memory of another proper type.

FIG. 23 is a schematic block diagram of a communications system 2300 according to an embodiment of this application. The communications system 2300 includes a terminal device 2310 and a network device 2320.

In an implementation, the terminal device 2310 is configured to start GNSS measurement and/or start a timer related to GNSS measurement in a case that a GNSS position is invalid.

In an implementation, the terminal device 2310 is configured to acquire duration of a GNSS valid timer, where a GNSS position of the terminal device is valid during running of the GNSS valid timer.

In an implementation, the network device 2320 is configured to acquire the duration of the GNSS valid timer.

The terminal device 2310 may be configured to implement corresponding functions implemented by the terminal device in the foregoing method, and the network device 2320 may be configured to implement corresponding functions implemented by the network device in the foregoing methods. For brevity, details are not described herein again.

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions. When the computer program instructions are loaded and executed on a computer, the procedures or functions according to embodiments of this application are completely or partially generated. The computer may be a general-purpose computer, a dedicated computer, a computer network, or another programmable apparatus. The computer instructions may be stored in a computer-readable storage medium or transmitted from one computer-readable storage medium to another computer-readable storage medium. For example, the computer instructions may be transmitted from a website, computer, server, or data center to another website, computer, server, or data center in a wired (such as a coaxial cable, an optical fiber, and a digital subscriber line (DSL)) manner or a wireless (such as infrared, wireless, and microwave) manner. The computer-readable storage medium may be any available medium accessible by the computer, or a data storage device, such as a server or a data center that integrates one or more available media. The available medium may be a magnetic medium (for example, a floppy disk, a hard disk, or a magnetic tape), an optical medium (for example, a DVD), a semiconductor medium (for example, a solid state disk (Solid State Disk, SSD)), or the like.

It should be understood that, in embodiments of this application, sequence numbers of the foregoing processes do not mean execution sequences. The execution sequences of the processes should be determined based on functions and internal logic of the processes, and should not be construed as any limitation on the implementation processes of the embodiments of this application.

It may be clearly understood by a person skilled in the art that, for the purpose of convenient and brief description, for a detailed working process of the foregoing system, apparatus, and unit, reference may be made to corresponding processes in the foregoing method embodiments, and details are not described herein again.

The foregoing descriptions are merely specific implementations of this application, but the protection scope of this application is not limited thereto. Any variation or replacement readily figured out by a person skilled in the art within the technical scope disclosed in this application shall fall within the protection scope of this application. Therefore, the protection scope of this application shall be subject to the protection scope of the claims.

## Claims

1. A position measurement method, comprising:
starting, by a terminal device, global navigation satellite system GNSS measurement and/or a timer related to GNSS measurement in a case that a GNSS position is invalid.

2. The method according to claim 1, wherein the method further comprises:
performing GNSS measurement during running of the timer in a case that the terminal device starts GNSS measurement and starts the timer.

3. The method according to claim 1 or 2, wherein the method further comprises:
releasing, by the terminal device, radio resource control RRC connection to return to an RRC idle state or triggering, by the terminal device, a radio link failure RLF process in a case that the timer has expired and the terminal device has not completed GNSS measurement.

4. The method according to any one of claims 1 to 3, wherein the method further comprises:
stopping the timer in a case that the terminal device completes at least one of GNSS measurement, uplink synchronization or downlink synchronization.

5. The method according to any one of claims 1 to 4, wherein the method further comprises:
in a case that the terminal device completes at least one of GNSS measurement, uplink synchronization or downlink synchronization, transmitting, by the terminal device, a notification message, wherein the notification message is used to notify a network device that the terminal device has completed the at least one of GNSS measurement, uplink synchronization or downlink synchronization.

6. The method according to claim 1, wherein the method further comprises:
waiting for, by the terminal device, a GNSS measurement command during running of the timer after starting the timer in a case that the GNSS position is invalid.

7. The method according to claim 6, wherein the method further comprises:
releasing, by the terminal device, RRC connection to return to an RRC idle state or triggering, by the terminal device, an RLF process in a case that the timer has expired and the terminal device has not received the GNSS measurement command.

8. The method according to any one of claims 1 to 7, wherein a condition for starting the timer comprises at least one of following:
the GNSS position is invalid;
the terminal device has not received a GNSS measurement command from a network device since completion of the most recent GNSS measurement; or
it is determined, based on a closed-loop timing advance TA adjustment mechanism and/or a closed-loop frequency offset adjustment mechanism, that uplink out-of-synchronization occurs on the terminal device.

9. The method according to any one of claims 1 to 8, wherein the method further comprises:
stopping the timer in a case that the terminal device receives the GNSS measurement command from a network device.

10. The method according to any one of claims 1 to 9, wherein duration of the timer is configured by a network device.

11. The method according to claim 10, wherein duration of a measurement gap is reused as the duration of the timer.

12. The method according to any one of claims 1 to 10, wherein the GNSS position being invalid comprises that: a GNSS valid timer has expired.

13. A timer maintenance method, comprising:
acquiring, by a terminal device, duration of a GNSS valid timer, wherein a GNSS position of the terminal device is valid during running of the GNSS valid timer.

14. The method according to claim 13, wherein the method further comprises:
transmitting, by the terminal device, first information, wherein the first information is used for reporting the duration of the GNSS valid timer, and the duration of the GNSS valid timer is determined by the terminal device.

15. The method according to claim 14, wherein the method further comprises:
starting, by the terminal device, the GNSS valid timer when transmitting the first information.

16. The method according to any one of claims 13 to 15, wherein the method further comprises:
receiving, by the terminal device, second information, wherein the second information is used for configuring the duration of the GNSS valid timer.

17. The method according to claim 16, wherein the GNSS valid timer is started in a manner comprising at least one of following:
starting the GNSS valid timer by the terminal device when receiving the second information; or
starting the GNSS valid timer by the terminal device at a specified time point based on the second information.

18. The method according to claim 17, wherein the specified time point comprises at least one of following:
a time point for starting the GNSS valid timer comprised in the second information; or
a time point at which the second information becomes effective.

19. The method according to any one of claims 13 to 18, wherein the method further comprises:
stopping the GNSS valid timer in a case that the terminal device receives a GNSS measurement command; or
stopping the GNSS valid timer in a case that the terminal device starts to perform GNSS measurement.

20. A timer maintenance method, comprising:
acquiring, by a network device, duration of a GNSS valid timer of a terminal device, wherein a GNSS position of the terminal device is valid during running of the GNSS valid timer.

21. The method according to claim 20, wherein the method further comprises:
receiving, by the network device, first information, wherein the first information is used for reporting the duration of the GNSS valid timer, and the duration of the GNSS valid timer is determined by the terminal device.

22. The method according to claim 21, wherein the GNSS valid timer is started when the terminal device transmits the first information.

23. The method according to any one of claims 20 to 22, wherein the method further comprises:
transmitting, by the network device, second information, wherein the second information is used for configuring the duration of the GNSS valid timer.

24. The method according to claim 23, wherein the second information is used for indicating starting the GNSS valid timer at a specified time point.

25. The method according to claim 24, wherein the specified time point comprises at least one of following:
a time point for starting the GNSS valid timer comprised in the second information; or
a time point at which the second information becomes effective.

26. The method according to any one of claims 20 to 25, wherein the method further comprises:
transmitting, by the network device, a GNSS measurement command, wherein the GNSS measurement command is used to stop the GNSS valid timer.

27. A terminal device, comprising: a processing unit, configured to start GNSS measurement and/or start a timer related to GNSS measurement in a case that a GNSS position is invalid.

28. The terminal device according to claim 27, wherein the processing unit is further configured to perform GNSS measurement during running of the timer in a case that GNSS measurement and the timer are started.

29. The terminal device according to claim 27 or 28, wherein the processing unit is further configured to release radio resource control RRC connection to return to an RRC idle state or trigger, by the terminal device, a radio link failure RLF process in a case that the timer has expired and the terminal device has not completed GNSS measurement.

30. The terminal device according to any one of claims 27 to 29, wherein the processing unit is further configured to stop the timer in a case that the terminal device completes at least one of GNSS measurement, uplink synchronization or downlink synchronization.

31. The terminal device according to any one of claims 27 to 30, wherein the terminal device further comprises: a transmitting unit, configured to transmit a notification message in a case that the terminal device completes at least one of GNSS measurement, uplink synchronization or downlink synchronization, wherein the notification message is used to notify a network device that the terminal device has completed the at least one of GNSS measurement, uplink synchronization or downlink synchronization.

32. The terminal device according to claim 27, wherein the processing unit is further configured to wait for a GNSS measurement command during running of the timer after starting the timer in a case that the GNSS position is invalid.

33. The terminal device according to claim 32, wherein the processing unit is further configured to release RRC connection to return to an RRC idle state or trigger, by the terminal device, an RLF process in a case that the timer has expired and the terminal device has not received the GNSS measurement command.

34. The terminal device according to any one of claims 27 to 33, wherein a condition for the processing unit to start the timer comprises at least one of following:
the GNSS position is invalid;
the terminal device has not received a GNSS measurement command from a network device since completion of the most recent GNSS measurement; or
it is determined, based on a closed-loop timing advance TA adjustment mechanism and/or a closed-loop frequency offset adjustment mechanism, that uplink out-of-synchronization occurs on the terminal device.

35. The terminal device according to any one of claims 27 to 34, wherein the processing unit is further configured to stop the timer in a case of receiving the GNSS measurement command from a network device.

36. The terminal device according to any one of claims 27 to 35, wherein duration of the timer is configured by a network device.

37. The terminal device according to claim 36, wherein duration of a measurement gap is reused as the duration of the timer.

38. The terminal device according to any one of claims 27 to 37, wherein the GNSS position being invalid comprises that: a GNSS valid timer has expired.

39. A terminal device, comprising: a processing unit, configured to acquire duration of a GNSS valid timer, wherein a GNSS position of the terminal device is valid during running of the GNSS valid timer.

40. The terminal device according to claim 39, wherein the terminal device further comprises:
a transmitting unit, configured to transmit first information, wherein the first information is used for reporting the duration of the GNSS valid timer, and the duration of the GNSS valid timer is determined by the terminal device.

41. The terminal device according to claim 40, wherein the terminal device further comprises:
the processing unit is further configured to start the GNSS valid timer when the transmitting unit transmits the first information.

42. The terminal device according to any one of claims 39 to 41, wherein the terminal device further comprises:
a receiving unit, configured to receive second information, wherein the second information is used for configuring the duration of the GNSS valid timer.

43. The terminal device according to claim 42, wherein a manner in which the processing unit starts the GNSS valid timer comprises at least one of following:
starting the GNSS valid timer when receiving the second information; or
starting the GNSS valid timer at a specified time point based on the second information.

44. The terminal device according to claim 43, wherein the specified time point comprises at least one of following:
a time point for starting the GNSS valid timer comprised in the second information; or
a time point at which the second information becomes effective.

45. The terminal device according to any one of claims 39 to 44, wherein the processing unit is further configured to: stop the GNSS valid timer in a case that the terminal device receives a GNSS measurement command; or stop the GNSS valid timer in a case that the terminal device starts to perform GNSS measurement.

46. A network device, comprising:
a processing unit, configured to acquire duration of a GNSS valid timer of a terminal device, wherein a GNSS position of the terminal device is valid during running of the GNSS valid timer.

47. The network device according to claim 46, wherein the network device further comprises:
a receiving unit, configured to receive first information, wherein the first information is used for reporting the duration of the GNSS valid timer, and the duration of the GNSS valid timer is determined by the terminal device.

48. The network device according to claim 47, wherein the GNSS valid timer is started when the terminal device transmits the first information.

49. The network device according to any one of claims 46 and 47, wherein the network device further comprises:
a first transmitting unit, configured to transmit second information, wherein the second information is used for configuring the duration of the GNSS valid timer.

50. The network device according to claim 49, wherein the second information is used for indicating starting the GNSS valid timer at a specified time point.

51. The network device according to claim 50, wherein the specified time point comprises at least one of following:
a time point for starting the GNSS valid timer comprised in the second information; or
a time point at which the second information becomes effective.

52. The network device according to any one of claims 46 to 51, wherein the network device further comprises:
a second transmitting unit, configured to transmit a GNSS measurement command, wherein the GNSS measurement command is used to stop the GNSS valid timer.

53. A terminal device, comprising a processor and a memory, wherein the memory is configured to store a computer program, and the processor is configured to invoke and run the computer program stored in the memory to cause the terminal device to execute the method according to any one of claims 1 to 12 or claims 13 to 19.

54. A network device, comprising a processor and a memory, wherein the memory is configured to store a computer program, and the processor is configured to invoke and run the computer program stored in the memory, to cause the network device to execute the method according to any one of claims 20 to 26.

55. A chip, comprising a processor, wherein the processor is configured to invoke a computer program from a memory and run the computer program to cause a device installed with the chip to execute the method according to any one of claims 1 to 12 or claims 13 to 19.

56. A chip, comprising a processor, configured to invoke a computer program from a memory and run the computer program, to cause a device installed with the chip to execute the method according to any one of claims 20 to 26.

57. A computer-readable storage medium, configured to store a computer program, wherein when the computer program is executed by a device, the device is caused to execute the method according to any one of claims 1 to 12 or claims 13 to 19.

58. A computer-readable storage medium, configured to store a computer program, wherein when the computer program is run by a device, the device is caused to execute the method according to any one of claims 20 to 26.

59. A computer program product, comprising computer program instructions, wherein the computer program instructions cause a computer to execute the method according to any one of claims 1 to 12 or claims 13 to 19.

60. A computer program product, comprising computer program instructions, wherein the computer program instructions cause a computer to execute a method according to any one of claims 20 to 26.

61. A computer program, wherein the computer program causes a computer to execute the method according to any one of claims 1 to 12 or claims 13 to 19.

62. A computer program, wherein the computer program causes a computer to execute the method according to any one of claims 20 to 26.
